Europäisches Patentamt

European Patent Office

Office européen des brevets

(11) Publication number: **0 060 285**
**B1**

## (12) EUROPEAN PATENT SPECIFICATION

(45) Date of publication of patent specification: **04.12.85**

(51) Int. Cl.⁴: **G 03 B 27/72, G 05 D 25/02**

(21) Application number: **81902633.7**

(22) Date of filing: **14.09.81**

(86) International application number:
**PCT/GB81/00189**

(87) International publication number:
**WO 82/01081 01.04.82 Gazette 82/09**

(54) **METHOD AND APPARATUS FOR ILLUMINATING A DOCUMENT TO BE PHOTOGRAPHED.**

(30) Priority: **15.09.80 GB 8029736**

(43) Date of publication of application:
**22.09.82 Bulletin 82/38**

(45) Publication of the grant of the patent:
**04.12.85 Bulletin 85/49**

(84) Designated Contracting States:
**DE FR GB**

(56) References cited:
**DE-A-2 226 542**
**US-A-3 647 296**
**US-A-4 175 855**
**US-A-4 199 252**

**Society of Photo-Optical Instrumentation Engineers; Proceedings of the annual technical symposium, 15th Proc. 14-17 September 1970, published in 1971 (US), G. Micanek, "Parameters for optimized microfilm equipment systems design" pages 355, 357-363.**

(73) Proprietor: **IMTEC MANAGEMENT INFORMATION TECHNOLOGY LIMITED**
**168 Honeypot Lane**
**Stanmore Middlesex HA7 1LE (GB)**

(72) Inventor: **SEIB, Martin Raymond Percival**
**81, Camberwell Grove**
**Camberwell London S.E.5 (GB)**

(74) Representative: **Newby, John Ross et al**
**J.Y. & G.W. Johnson Furnival House 14/18 High Holborn**
**London WC1V 6DE (GB)**

Courier Press, Leamington Spa, England.

# Description

## Technical field

This invention relates to a method of, and apparatus for, controlling the ratio between top and bottom lighting in the recording of document images e.g. on microfilm.

## Background art

Documents are commonly recorded on microfilm and in the case of an engineering drawing, this is commonly recorded on microfilm using a large planetary camera. Engineering drawings are produced on a wide variety of materials including comparatively opaque white paper and translucent materials such as tracing paper and diazo coated films. The original drawings which a draughtsman prepares are usually made on preprinted translucent sheets and sometimes the preprinted information is printed on the top surface and sometimes on the bottom surface of the sheet. The draughtsman normally draws the image on the top side of the sheet. Full size contact prints may be made on diazo duplicate paper and the dye of this duplicate image may be on the top or bottom face of the diazo sheet.

These variations in the original documents presented for microfilming lead to the need in a planetary camera for bottom lighting, top lighting, or a mixture of top and bottom lighting to produce the best contrast in the microfilm recordings.

A planetary camera used for microfilming large documents such as engineering drawings commonly has a table with a diffusing opalescent white plastics top surface which the document to be microfilmed rests on. A lower set of lights is commonly provided below the table surface with a control to vary the brightness of the bottom lighting from zero to the maximum the lower set of lights can provide. A separate upper set of lights is provided above the document table which is independently controllable to vary the brightness of the upper set from zero to its maximum.

These two independently controllable sets of lights can provide a wide range of illumination conditions for any given document. The problem arises, however, of providing a logical set of instructions to the camera operator to ensure that the document illumination is set to the optimum for a particular document.

The purpose of the illumination system is to provide sufficient light intensity to produce the required image and at the same time to maximise the contrast in the image, particularly in cases where the original document contrast is low. Prior art illumination systems have either left it to the camera operator to judge when maximum contrast has been achieved by varying the proportion of top to bottom lighting while observing the document from above, or else have relied on set ratios for particular classes of documents.

Neither of these prior art systems is wholly satisfactory. Relying on the experience of the operator to set the ratio may be reasonable in the case of a fully experienced operator, but it is exceedingly difficult (if not impossible) to make an assessment of maximum contrast in conditions in which the brightness of the viewed image is changing. Relying on the use of some arbitrarily preset ratio must be an approximation to a correct setting in most cases.

The present invention provides an improved method and apparatus which avoids the aforementioned disadvantages.

## Disclosure of the invention

According to one aspect of the invention a method of controlling the ratio between top and bottom illumination of a document for imaging which comprises maintaining the apparent brightness of the document at least substantially constant while the proportion of top to bottom lighting is varied, is characterised in that the ratio between top and bottom lighting is manually set at a given overall brightness of the document and the set ratio is maintained when the overall brightness of the document is changed.

By operating in accordance with the method of the invention, an operator can observe the apparent density of any chosen line on a document and can adjust the ratio between reflected and transmitted light (i.e. top to bottom lighting) to obtain the maximum visual line density.

By ensuring that the overall brightness of the document does not vary during the ratio adjusting operation it has been found that optimum ratio setting can be obtained by even inexperienced operators.

The set level of overall brightness used during the ratio adjustment need not be that required for the exposure to make the image, provided overall brightness can be adjusted without effecting the pre-set ratio.

In terms of apparatus, the invention comprises a light-transmitting document-support, first lighting means positioned to illuminate the support from one side, second lighting means positioned to illuminate the support from the opposite side, image-forming means on said one side of the support for producing a permanent image of a document placed against said support, lumen sensing means on said one side of the support to monitor the apparent brightness of a document placed against said support, which is characterised in that a brightness ratio control means is provided to vary the ratio between the brightness of the first and the second lighting means and a control circuit is employed to energise the two lighting means to provide the ratio of top to bottom lighting set by said control means at the pre-set overall brightness determined by said lumen sensing means.

The image-forming means can be a camera using photographic film or diazo film or it could be a copying machine based on the xerographic principle. Incandescent lamps and/or fluorescent lamps can be used for both lighting means but incandescent lamps may be preferred for the first and fluorescent tubes for the second.

The support can be of white translucent material and is preferably disposed horizontally so that said one side is above the support.

Brief description of the drawings

The invention will now be further described, by way of example, with reference to the accompanying drawings, in which:—

Figure 1 is a schematic illustration of a camera layout for operating in accordance with the method of the invention,

Figure 2 is a block diagram to illustrate the mode of operation of the layout of Figure 1 during ratio setting, and

Figures 3a and 3b are two alternative arrangements for the high gain feedback amplifier used in the brightness control circuit of a practical embodiment as shown in Figure 1.

Preferred embodiment

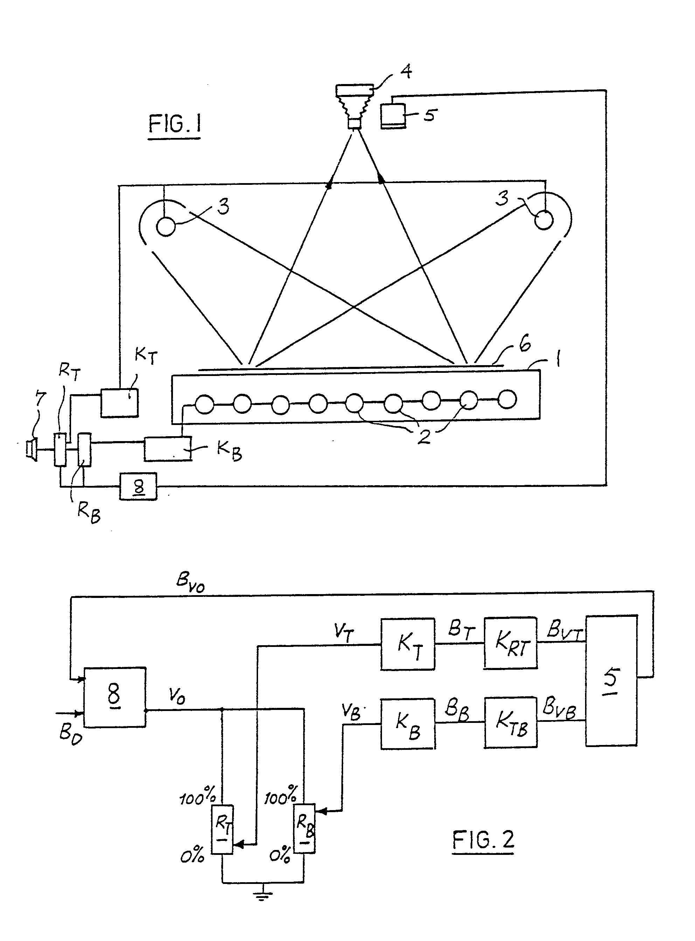

The camera shown in Figure 1 comprises a horizontal table 1 of white diffusing translucent material below which is located a bank of parallel bottom lights 2. A pair of top lights 3 illuminate the table 1 from above. A camera 4 and an adjacent photocell 5 are positioned to receive light reflected from and light transmitted through, a document 6 resting on the table 1. The photocell 5 monitors the brightness of the document 6 as seen by the camera 4.

The brightness of the top lights 3 is controlled by a power control circuit $K_T$ fed from a potentiometer $R_T$ and the brightness of the bottom lights 2 is controlled by a power control circuit $K_B$ fed from a potentiometer $R_B$, these two potentiometers being ganged together and simultaneously operated by a ratio knob 7. The output from the photocell 5, which senses the lumens using from the document 6 (i.e. those reflected from the lights 3 and those transmitted from the lights 2), is fed to a brightness control circuit 8 which supplies the electrical power to the potentiometers $R_T$ and $R_B$.

The mode of operation of the apparatus shown in Figure 1 can be deduced from Figure 2. In this Figure, the voltage fed to the control circuit $K_T$ is $V_T$ and that fed to $K_B$ is $V_B$. The designations $B_T$ and $B_B$ refer to the brightness of the top and bottom lights, respectively, and the designations $BV_T$ and $BV_B$ represent the viewed brightness of the document 6 due, respectively, to the top light only and to the bottom light only. $KR_T$ and $KT_B$ represent, respectively, the reflectance coefficient of the document 6 in respect of the light from the lights 3 and the transmission coefficient in respect of the light from the lights 2.

$BV_O$ represents the overall document brightness as viewed by the photocell 5 and $B_D$ is a preset signal for the overall illumination required during the visual setting of the ratio knob 7. $V_O$ is the output from the control circuit 8 and is the voltage fed to the potentiometers $R_T$ and $R_B$. In practice the voltage $B_D$ can be derived from a potentiometer under operator control since the optimum overall brightness at which an operator finds it easiest to set the ratio knob 7 for maximum line density can vary slightly from operator to operator. Once the ratio $V_T/V_B$ has been set for a particular document, $V_O$ can be altered to that required for optimum imaging in the camera 4 (e.g. in the case of very fast silver halide film in the camera a reduction in $V_O$ may be desirable during exposure to put the latter within the shutter speed range of the camera) or when using a very slow film process an increase in $V_O$ may be desirable to minimise exposure time and maximise the production of microfilm images) and this alteration of $V_O$ can be effected automatically (using the output of the photocell 5) or manually.

Mode of operation

The mode of operation of the equipment shown in Figure 1 will be clear from the above description and it will be appreciated that the operator, having set the overall brightness level most suited to him/her, will adjust the knob 7 to optimise the apparent density of lines on the document to be photographed, and will then (using any conventional technique to set the brightness for exposure) record the image in the camera at the appropriate brightness for exposure. Whatever brightness setting is used for the exposure it will retain the ratio of top to bottom lighting he/she had originally set, and will thus secure optimum clarity of the eventual image.

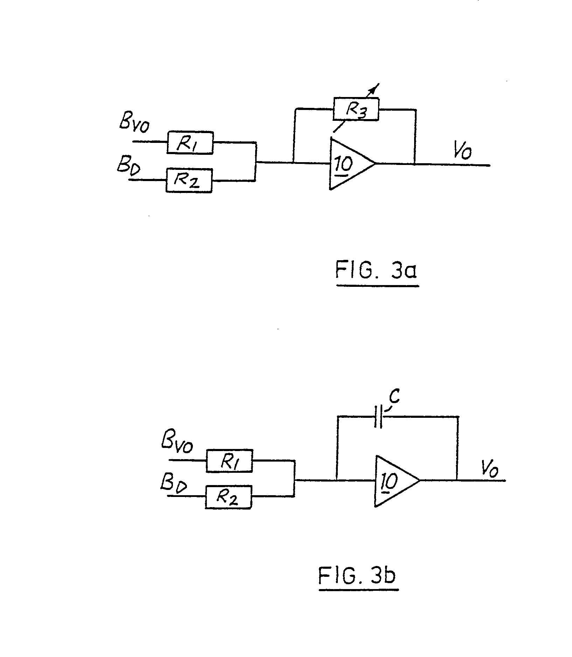

The control circuit 8 in Figures 1 and 2, should be able to generate the signal $V_O$ from very small differences between the brightness demanded $B_D$ and the brightness viewed overall $BV_O$. A suitable circuit is shown in Figure 3a where a direct negative feedback high gain amplifier is shown. The input $BV_O$ and $B_D$ are fed to the input of a high gain amplifier 10 via resistors $R_1$ and $R_2$, a variable feed back resistor $R_3$ being used to control the gain. The circuit gives a very rapid response of $V_O$ to any signal $BV_O—B_D$.

Figure 3b shows an integrating amplifier in which the high gain amplifier 10 is placed in parallel with a capacitor C. This has the advantage of providing a slow response of $V_O$ to changes in $BV_O—B_D$ and makes for a stable control arrangement in the face of lamps which change their brightness relatively slowly compared to the change in power fed to them.

**Claims**

1. A method of controlling the ratio between top and bottom illumination of a document for imaging, comprising maintaining the apparent brightness of the document at least substantially constant while the proportion of top to bottom lighting is varied, characterised in that the ratio between top and bottom lighting is manually set at a given overall brightness of the document and the set ratio is maintained when the overall brightness of the document is changed.

2. A method as claimed in claim 1, characterised in that following an adjustment of the said ratio, the level of overall brightness maintained during the ratio adjustment is reset to that required for the exposure to make the image without effecting the pre-set ratio.

3. Apparatus for producing a permanent image of a document comprising a light-transmitting document-support (1), first lighting means (3) positioned to illuminate the support from one side, second lighting means (2) positioned to illuminate the support from the opposite side, image-forming means (4) on said one side of the support for producing a permanent image of a document (6) placed against said support and lumen sensing means (5) on said one side of the support (1) to monitor the apparent brightness of a document (6) placed against said support, characterised in that a brightness ratio control means (7) is provided to vary the ratio between the brightness of the first (3) and the second (2) lighting means and a control circuit (8) is employed to energise the two lighting means (2, 3) to provide the ratio of top to bottom lighting set by said control means (7) at the pre-set overall brightness determined by said lumen sensing means (5).

4. Apparatus as claimed in claim 3, characterised in that means ($B_D$) is provided to permit the overall brightness employed for setting of the brightness ratio, to be adjusted, without change of said ratio, when the image forming means (4) is to be used to produce a permanent image.

5. Apparatus as claimed in claim 3 or claim 4, characterised in that the document-support (1) is a sheet of white translucent material.

6. Apparatus as claimed in any of claims 3 to 5, characterised in that the first lighting means (3) is one or more incandescent lamps and the second lighting means (2) is a bank of fluorescent tubes.

7. Apparatus as claimed in any of claims 3 to 6, characterised in that the lumen sensing means (5) is a photocell disposed adjacent to the image-forming means (4).

8. Apparatus as claimed in any of claims 3 to 7, characterised in that the brightness ratio control means (7) comprises a manually adjustable ganged pair of potentiometers ($R_T$, $R_B$).

9. Apparatus as claimed in claim 8, characterised in that the control circuit (8) receives an input ($BV_O$) from the lumen sensing means (5) and supplies an output ($V_O$) to each of the ganged pair of potentiometers ($R_T$, $R_B$).

10. Apparatus as claimed in claim 9, characterised in that the control circuit (8) includes an integrating amplifier (10, C).

**Patentansprüche**

1. Verfahren zum Steuern des Verhältnisses zwischen der oberseitigen und unterseitigen Beleuchtung eines Dokuments zur Abbildung, umfassend die wenigstens im wesentlichen konstante Erhaltung der scheinbaren Helligkeit des Dokuments bei Veränderung des Verhältnisses von oberseitiger zu unterseitiger Beleuchtung, dadurch gekennzeichnet, dass das Verhältnis zwischen oberseitiger und unterseitiger Beleuchtung von Hand auf eine gegebene Gesamthelligkeit des Dokuments eingestellt wird und das eingestellte Verhältnis bei Veränderung der Gesamthelligkeit des Dokuments aufrechterhalten wird.

2. Verfahren nach Anspruch 1, dadurch gekennzeichnet, dass nach einer Einstellung des besagten Verhältnisses der während der Verhältniseinstellung aufrechterhaltene Gesamthelligkeitspegel neu auf den für die Belichtung benötigten eingestellt wird, um das Bild ohne Beeinflussung des voreingestellten Verhältnisses zu erzeugen.

3. Gerät zur Erzeugung einer bleibenden Abbildung eines Dokuments, mit einem lichtdurchlässigen Dokumententräger (1), einem ersten zur Beleuchtung des Trägers von einer Seite angeordneten Beleuchtungsmittel (3), zweiten zur Beleuchtung des Trägers von der gegenüberliegenden Seite angeordneten Beleuchtungsmittel (2), bilderzeugenden Mittel (4) auf besagter einer Trägerseite zur Erzeugung einer bleibenden Abbildung eines an besagten Träger angelegten Dokuments (6) und einem Lichtstromfühlmittel (5) an besagter einer Seite des Trägers (1) zur Ueberwachung der scheinbaren Helligkeit eines an besagten Träger angelegten Dokuments (6), dadurch gekennzeichnet, dass zum Verändern des Verhältnisses zwischen der Helligkeit des ersten (3) und des zweiten (2) Beleuchtungsmittels ein Helligkeitsverhältnisregelmittel (7) vorgesehen ist und für die Energiezuführung zu den beiden Beleuchtungsmitteln (2, 3) eine Steuerschaltung (8) eingesetzt wird, um das durch besagtes Regelmittel (7) eingestellte Verhältnis von oberseitiger zu unterseitiger Beleuchtungg mit der durch besagtes Lichtstromfühlmittel (5) bestimmten voreingestellten Gesamthelligkeit bereitzustellen.

4. Gerät nach Anspruch 3, dadurch gekennzeichnet, dass Mittel ($B_D$) vorgesehen sind, um die Einstellung der zum Einstellen des Helligkeitsverhältnisses benutzten Gesamthelligkeit ohne Veränderung des besagten Verhältnisses zu ermöglichen, wenn das bilderzeugende Mittel (4) zur Erzeugung eines bleibenden Bildes benutzt werden soll.

5. Gerät nach Anspruch 3 oder 4, dadurch gekennzeichnet, dass der Dokumententräger (1) eine Scheibe weissen durchscheinenden Materials ist.

6. Gerät nach einem der Ansprüche 3 bis 5, dadurch gekennzeichnet, dass das erste Beleuchtungsmittel (3) aus einer oder mehreren Glühlampen besteht und das zweite Beleuchtungsmittel (2) eine Batterie von Leuchtstoffröhren ist.

7. Gerät nach einem der Ansprüche 3 bis 6, dadurch gekennzeichnet, dass das Lichtstromfühlmittel (5) eine neben dem bilderzeugenden Mittel (4) angeordnete Photozelle ist.

8. Gerät nach einem der Ansprüche 3 bis 7, dadurch gekennzeichnet, dass das Helligkeitsverhältnisregelmittel (7) ein von Hand einstellbares gekuppeltes Paar Potentiometer ($R_T$, $R_B$) umfasst.

9. Gerät nach Anspruch 8, dadurch gekennzeichnet, dass die Steuerschaltung (8) ein Eingangssignal ($BV_O$) vom Lichtstromfühlmittel (5) erhält und jedem dem gekuppelten Paars Potentiometer ($R_T$, $R_B$) ein Ausgangssignal ($V_O$) zuführt.

10. Gerät nach Anspruch 9, dadurch gekennzeichnet, dass die Steuerschaltung (8) einen integrierenden Verstärker (10, C) enthält.

## Revendications

1. Procédé pour régler le rapport entre l'éclairage de dessus et l'éclairage de dessous d'un document à reproduire, suivant lequel on maintient la luminosité apparente du document au moins en substance constante tout en modifiant la proportion de l'éclairage de dessus par rapport à l'éclairage de dessous, caractérisé en ce qu'on règle le rapport entre l'éclairage de dessus et l'éclairage de dessous manuellement à une luminosité totale donnée du document et on maintient le rapport réglé lorsque le luminosité totale du document est modifiée.

2. Procédé suivant la revendication 1, caractérisé en ce qu'après un réglage du dit rapport, on réajuste le niveau de luminosité totale maintenu pendant le réglage du rapport à la valeur requise pour l'exposition afin de former l'image reproduite sans affecter le rapport préréglé.

3. Appareil pour produire une image permanente d'un document comprenant un support de document transmettant la lumière (1), un premier dispositif d'éclairage (3) placé de manière à éclairer le support d'un côté, un second dispositif d'éclairage (2) placé de manière à éclairer le support du côté opposé, un dispositif formateur d'image (4) du premier côté du support pour produire une image permanente d'un document placé contre le support et un dispositif sensible à l'éclairement (5) du premier côté du support (1) pour surveiller la luminosité apparente d'un document (6) placé contre le support, caractérisé en ce qu'un dispositif de réglage du rapport de luminosité (7) est prévu pour modifier le rapport entre la luminosité du premier dispositif d'éclairage (3) et du second dispositif d'éclairage (2) et un circuit de réglage (8) est utilisé pour exciter les deux dispositifs d'éclairage (2, 3) en vue de fournir le rapport de l'éclairage de dessus à l'éclairage de dessous réglé par le dispositif de réglage (7) pour la luminosité totale préréglée déterminée par le dispositif sensible à l'éclairement (5).

4. Appareil suivant la revendication 3, caractérisé en ce qu'un dispositif ($B_D$) est prévu pour permettre l'ajustement de la luminosité totale utilisée pour régler le rapport de luminosité, sans modification de ce rapport, lorsque le dispositif formateur d'image (4) doit être utilisé pour produire une image permanente.

5. Appareil suivant la revendication 3 ou 4, caractérisé en ce que le support de document (1) est une feuille de matière translucide blanche.

6. Appareil suivant l'une quelconque des revendications 3 à 5, caractérisé en ce que le premier dispositif d'éclairage (3) comprend une ou plusieurs lampes à incandescence et le second dispositif d'éclairage (2) comprend un banc de tubes fluorescents.

7. Appareil suivant l'une quelconque des revendications 3 à 6, caractérisé en ce que le dispositif sensible à l'éclairement (5) est une cellule photo-électrique disposée près du dispositif formateur d'image (4).

8. Appareil suivant l'une quelconque des revendications 3 à 7, caractérisé en ce que le dispositif de réglage du rapport de luminosité (7) comprend deux potentiomètres ($R_T$, $R_B$) couplés et réglables à la main.

9. Appareil suivant la revendication 8, caractérisé en ce que le circuit de réglage (8) reçoit un signal d'entrée ($BV_O$) du dispositif sensible à l'éclairement (5) et fournit un signal de sortie ($V_O$) à chaque potentiomètre de la paire de potentiomètres couplés ($R_T$, $R_B$).

10. Appareil suivant la revendication 9, caractérisé en ce que le circuit de réglage (8) comprend un amplificateur intégrateur (10, C).

FIG.1

FIG. 2

FIG. 3a

FIG. 3b